# EUROPÄISCHE PATENTSCHRIFT

(11) **EP 0 408 930 B1**
(45) Veröffentlichungstag und Bekanntmachung des Hinweises auf die Patenterteilung: **10.11.1993**
(21) Anmeldenummer: 90111980.0
(22) Anmeldetag: 25.06.1990
(51) Int. Cl.: B60R 11/02

(54) **Vorrichtung zur Halterung eines im wesentlichen quaderförmigen Gerätes in einem Kraftfahrzeug**
Device for securing a substantially rectangular apparatus in a motor vehicle
Dispositif de maintien d'un appareil de forme essentiellement rectangulaire dans un véhicule automobile

(30) Priorität: 19.07.1989 DE 3923867
(43) Veröffentlichungstag der Anmeldung: 23.01.1991
(73) Patentinhaber: MERCEDES-BENZ AG, 70327 Stuttgart (DE)
(72) Erfinder: Wurster, Dieter, Dipl.-Ing., D-7750 Konstanz (DE)

(56) Entgegenhaltungen:
- DE-A- 3 538 966
- DE-A- 3 808 748
- FR-A- 1 422 816
- US-A- 3 632 158
- US-A- 3 685 708
- US-A- 4 262 831

## Beschreibung

Die Erfindung betrifft eine Vorrichtung zur Halterung eines im wesentlichen quaderförmigen Gerätes, insbesondere eines an eine Autotelefonanlage anschließbaren Telefaxgerätes oder eines portablen Personalcomputers im Innenraum eines Kraftfahrzeuges.

Derartige Konstruktionen sind z.B. aus DE-A-3 538 966 und US-A-3 685 708 bekannt

Mit der Entwicklung von Telefaxgeräten und dem Ausbau der mobilen Telekommunikation eröffnet sich die Möglichkeit die mit einem mobilen Telefon gegebenen Kommunikationskanäle auch für die Übertragung von schriftlichen Dokumenten zu nutzen, insbesondere durch Betrieb eines im Inneren eines Kraftfahrzeugs befindlichen Telefaxgerätes über ein Autotelefon. Ein dabei auftretendes Problem ist die sichere Halterung des Telefaxgerätes, so daß auch bei einem Aufprallunfall keine Gefährdung der Insassen durch das unkontrolliert bewegte Gerät auftritt. Ähnliche Probleme treten auch bei der Unterbringung von anderen im wesentlichen quaderförmigen Geräten im Inneren eines Kraftfahrzeugs auf, wie zum Beispiel portablen Personalcomputern.

Im Auto Sport Magazin 3 (1988) Seite 144, wird die Kombination eines Autotelefons mit einem tragbaren Telefaxgerät beschrieben, das fest in die ausgehöhlte hintere Mittelarmlehne eines PKW eingebaut ist.

Nachteil einer solchen fest in einen Teil des Fahrzeugs integrierten Unterbringung des Faxgerätes ist, daß die im Prinzip durch die geringen Abmessungen und das kleine Gewicht moderner Telefaxgeräte gegebene Möglichkeit, diese auch außerhalb des Autos, zum Beispiel in einem Hotelzimmer, über das normale Telefonnetz zu betreiben, nicht genutzt werden kann. Ein weiterer Nachteil einer solchen Unterbringung ist, daß im Fahrzeug relativ aufwendige Veränderungen im Bereich der rückwärtige Sitze erforderlich sind, insbesondere der Ersatz der üblichen Mittelarmlehne durch eine Spezialkonstruktion.

Aufgabe der vorliegenden Erfindung ist die Angabe einer Vorrichtung zur sicheren Halterung eines im wesentlichen quaderförmigen Gerätes, insbesondere eines Telefaxgerätes auf der Sitzbank eines Kraftfahrzeuges, wobei die verschiedenen Seitenflächen des Gerätes und mit ihm eventuelle Buchsenanschlüße, Bedienelemente und Engabe- Ausgabeöffnungen leicht zugänglich sein sollen. Die Aufgabe wird entsprechend Anspruch 1 dadurch erreicht, daß ein offenes Rahmengestell zur Aufnahme des Gerätes vorgesehen ist, mit sich entlang der unteren Gerätekanten erstreckenden und das Gerät in seinem unteren Teil formschlüssig umfassenden Rahmenbereichen, mit zwei bügelartig über die vorderen Eckteile des Gerätes geführten und diese aufnehmenden Rahmenbereichen und mit einem bügelartig über den hinteren Teil des Gerätes geführten und diesen aufnehmenden Rahmenbereich, der in seinem unteren Teil Gelenke aufweist, so daß der obere Teil dieses Bereichs zur Sicherung oder Entsicherung des zu halternden Gerät verschwenkt werden kann, und daß mit dem Rahmengestell verbundene Mittel zur Befestigung der Vorrichtung auf einer Sitzbank vorgesehen sind. Die erfindungsgemäße Vorrichtung wird so auf einer Sitzbank im Fahrzeug installiert, daß die erwähnten, die vorderen Eckteile des Gerätes umfassenden Rahmenbereiche in Fahrtrichtung zeigen. Bei der Form des Rahmengestells ist berücksichtigt, daß bei starker Abbremsung des Fahrzeugs die Hauptkomponenten der auf das Gerät wirkenden Kräfte in Fahrtrichtung und nach oben gerichtet sind. Weitere vorteilhafte Ausführungen der Erfindung werden in den Unteransprüchen 2 bis 6 beschrieben.

Die Erfindung ermöglicht einerseits eine sichere Fixierung und die Unterbindung unkontrollierter Bewegungen des zu halternden Gerätes bei bewegtem Fahrzeug, insbesondere extrem positiven oder negativen Beschleunigungen in horizontaler oder vertikaler Richtung. Andererseits kann das Gerät schnell, einfach und sicher aus der erfindungsgemäßen Vorrichtung entnommen oder zur Halterung in die Vorrichtung eingesetzt werden. Die offene Konstruktion ermöglicht eine leichte Zugänglichkeit des gehalterten Gerätes.

Die Erfindung erweitert somit die Nutzungsmöglichkeiten eines portablen Telefaxgerätes, das entweder in Kombination mit einem Autotelefon zur Übermittlung von Dokumenten an Kraftfahrzeugen oder mit einer stationären Telefonanlage betrieben werden kann.

Gegenüber einem festen Einbau weist die Erfindung den Vorteil auf, keine aufwendigen Veränderungen an Teilen des Fahrzeuginnenraums zu erfordern. Die erfindungsgemäße Vorrichtung ist leicht und kompakt und kann einfach und schnell im Kraftfahrzeug installiert und auch wieder aus diesem entfernt werden.

Die Erfindung wird im Folgenden anhand der Figuren 1 bis 4 für den Fall eines zu halternden Telefaxgerätes erläutert.
- Fig. 1: zeigt eine erfindungsgemäße Vorrichtung in Obenansicht;
- Fig. 2: zeigt eine erfindungsgemäße Vorrichtung in Seitenansicht;
- Fig. 3: zeigt eine erfindungsgemäße Vorrichtung im Schnitt entlang der Ebene A in Fig. 1;
- Fig. 4: zeigt die Befestigung und Positionierung einer erfindungsgemäßen Vorrichtung auf der Fondsitzbank eines Pkw;

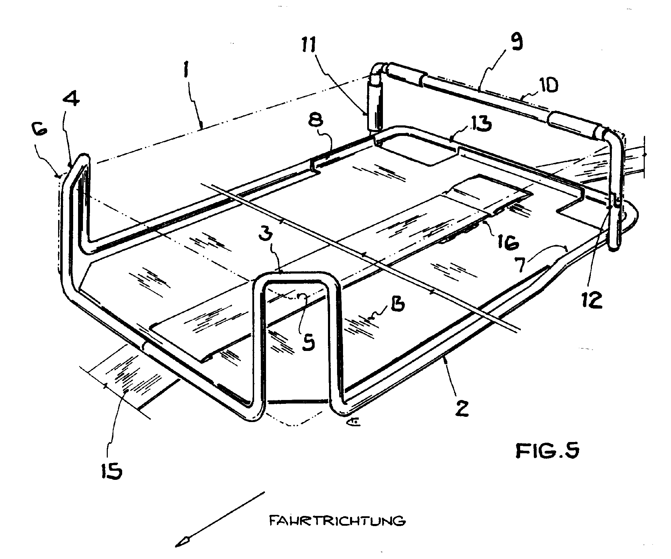

- Fig. 5.: zeigt eine perspektivische Darstellung der in den Figuren 1-3 dargestellten Vorrichtung.

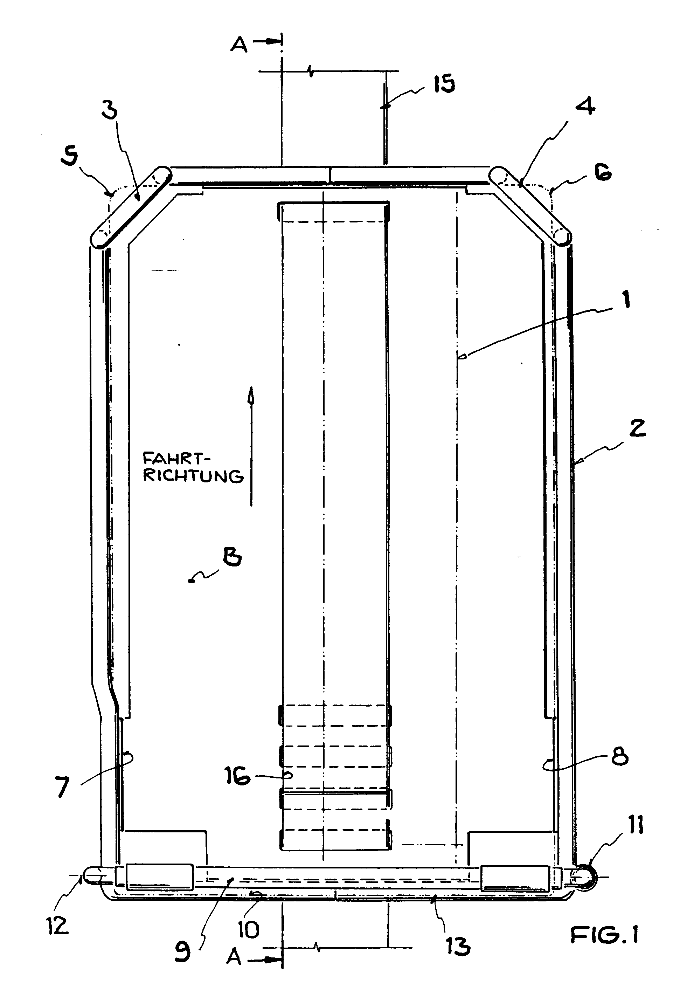

Fig. 1 zeigt eine erfindungsgemäße Vorrichtung mit einem eingesetzten Telefaxgerät 1. In der Obenansicht der Fig. 1 ist zu erkennen, daß die- Vorrichtung im wesentlichen aus einem offenen Rahmengestell 2 besteht, mit zwei schrägen Bereichen 3 und 4, für die Aufnahme von zwei Ecken 5 und 6 des Telefaxgerätes, zwei im wesentlichen parallel zu den Seitenwänden des eingesetzten Telefaxgerätes verlaufenden Bereichen 7 und 8 und einem Bereich 9, der das Telefaxgerät in dem den beiden Ecken 5 und 6 entgegengesetzten Bereich 10 umfaßt.

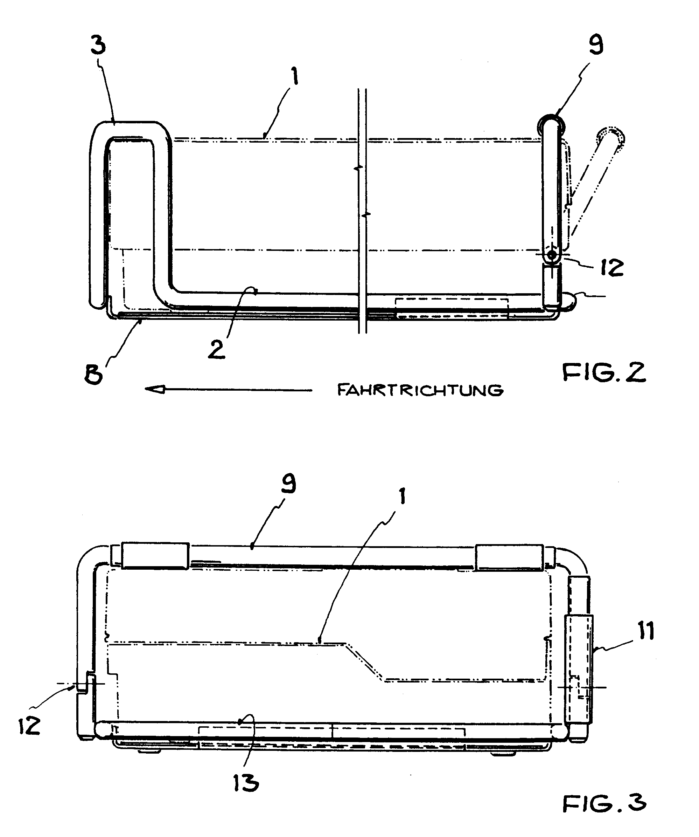

Nach Fig. 2 sind die Bereiche 3 und 4 jeweils als umgekehrtes U ausgebildet, wobei die Schenkel jedes U bei eingesetztem Telefaxgerät sich von der Unterseite zur Oberseite des Telefaxgerätes erstrecken und der zur Oberseite parallele Teil jedes U eine Arretierung des Telefaxgerätes nach oben und die U-Schenkel eine seitliche und vordere Arretierung bewirken. Die Bereiche 7 und 8 des Rahmens sind bei eingesetztem Telefaxgerät 1 jeweils entlang einer Geräte-Unterkante geführt. Der Bereich 9 ist als Klappbügel ausgebildet, der zum Arretieren den Bereich 10 des Telefaxgerätes umfaßt. Bei nach unten geschobener Hülsenverriegelung 11 wird das Gelenk 12 und ein im Gestell befindliches Gerät fixiert, während bei nach oben geschobener Verriegelung das Gelenk freigegeben wird, so daß der Bügel 9 umgeklappt werden kann.

Der Rahmen 2 weist außerdem einen Bereich 13 auf, der das Gerät 1 hindert, an der Unterseite des Bereichs 10 aus dem Gestell zu rutschen.

Der Rahmen 2 ist aus so starkem Rundmaterial gebogen, daß ein gehaltertes Gerät auch bei einem Aufprall von 30 g sicher fixiert bleibt.

Für ein Gerät mit rechteckiger Grundfläche liegen die Bereiche 7 und 8, sowie der Bereich 13 und der Verbindungsbereich zwischen den beiden U-Bereichen 3 und 4 parallel zueinander.

Eine Halterung von Geräten, die von der Quaderform abweichende Gestalt haben, z.B. eine trapezförmige Grundfläche, ist durch Anpassung der Gestellform an die Kantenführung des Gerätes möglich.

Auf der Unterseite der Vorrichtung ist eine Bodenplatte B vorgesehen, die mit dem Gestell 2 fest verbunden oder formschlüssig in die Rahmenstruktur eingepaßt werden kann.

Die Abmessungen des Gestells 2 sind den Abmessungen des Telefaxgerätes 1 so angepaßt, daß dieses formschlüssig aufgenommen wird. Falls erforderlich, können Distanzhalter auf den Rahmeninnenseiten angebracht werden, um kleinere Geräte zu haltern.

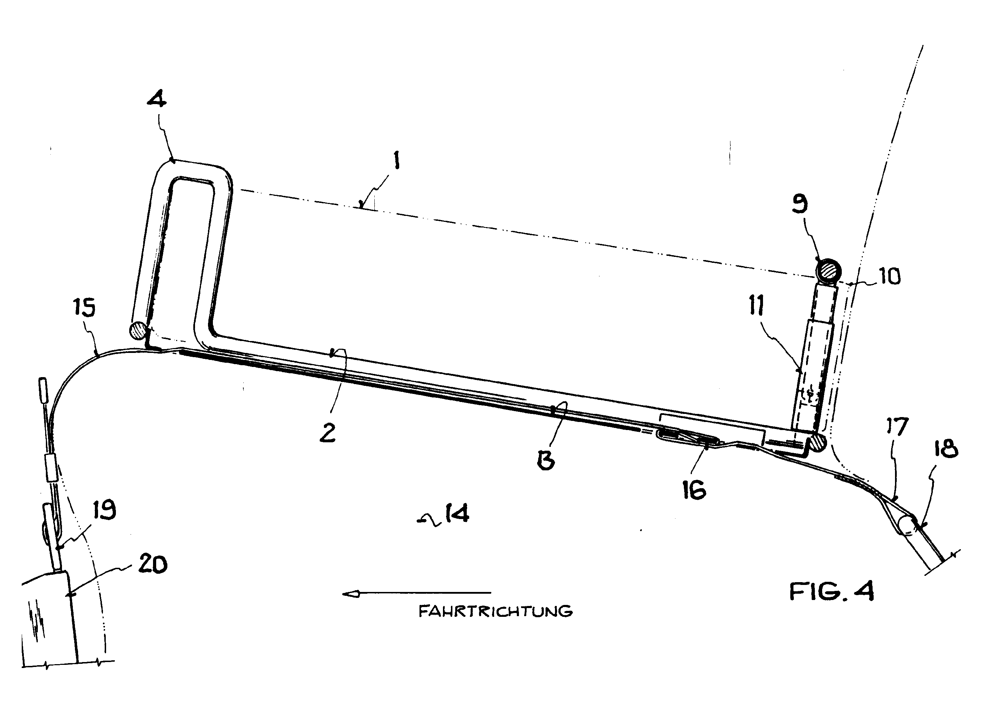

Zur sicheren Halterung eines Telefaxgerätes oder eines anderen im wesentlichen quaderförmigen Gerätes, wird das Gestell 2 auf der Sitzfläche einer Sitzbank im Inneren eines Kraftfahrzeugs mit nach vorn orientierten Bereichen 3 und 4 in einem solchen Abstand von der Rücklehne befestigt, daß der Bügel 9 umgeklappt werden kann. Eine vorteilhafte Ausführungsform für die Unterbringung auf der Fondsitzbank 14 eines PKW zeigt die Figur 4. Das Rahmengestell 2 wird hierzu durch einen straff spannbaren Gurt 15, der durch eine Kammstruktur 16 in der Bodenplatte B geführt wird und mit einer Schlaufe 17 am Haltebügel 18 eingehängt ist, und an seinem anderen Ende eine Verstellzunge 19 aufweist, auf der Sitzbank fixiert.

Zur Entfernung des Gestells 2 muß nach der Ausführungsform der Figur 4 lediglich das Gurtschloß 20 geöffnet und die Schlaufe 17 aus dem Haltebügel 18 entfernt werden.

Die Art der Befestigung nach Fig. 4 ist auch vorteilhaft für die Installation der Vorrichtung auf dem Beifahrersitz eines PKW oder LKW.

Bei PKWs mit Sitzgurten im Fondbereich, kann die Befestigung des Gestells 2 auch bei Verwendung einer passenden Steckzunge in Verbindung mit dem Beckengurtschloß erfolgen.

## Patentansprüche

1. Vorrichtung zur Halterung eines im wesentlichen quaderförmigen Gerätes (1) in einem Kraftfahrzeug, dadurch gekennzeichnet, daß ein offenes Rahmengestell (2) zur Aufnahme des Gerätes (1) vorgesehen ist,
- mit sich entlang der unteren Gerätekanten erstreckenden und das Gerät in seinem unteren Teil formschlüssig umfassenden Rahmenbereichen,
- mit zwei bügelartig über die vorderen Eckteile (5,6) des Gerätes (1) geführten und diese aufnehmenden Rahmenbereichen (3,4) und
- mit einem bügelartig über den hinteren Teil des Gerätes (1) geführten und diesen aufnehmenden Rahmenbereich (9), der in seinem unteren Teil Gelenke (12) aufweist, so daß der obere Teil dieses Bereichs zur Sicherung oder Entsicherung des zu halternden Gerät (1) verschwenkt werden kann,
und daß mit dem Rahmengestell (2) verbundene Mittel zur Befestigung (15) der Vorrichtung auf einer Sitzbank vorgesehen sind.

2. Vorrichtung nach Anspruch 1, dadurch gekennzeichnet, daß das Rahmengestell (2) aus einem Rundmaterial hoher Festigkeit besteht.

3. Vorrichtung nach Anspruch 1 oder 2, dadurch gekennzeichnet, daß als Gelenke (12) Klappgelenke mit Hülsenverriegelung (11) vorgesehen sind.

4. Vorrichtung nach einem der Ansprüche 1 bis 3, dadurch gekennzeichnet, daß eine Bodenplatte (B) vorgesehen ist.

5. Vorrichtung nach einem der Ansprüche 1 bis 4, dadurch gekennzeichnet, daß ein am Rahmengestell (2) befestigter Gurt (15) vorgesehen ist.

6. Vorrichtung nach einem der Ansprüche 1 bis 5, dadurch gekennzeichnet, daß die bügelartig über das Gerät geführten Rahmenbereiche (3,4,9) das Gerät formschlüssig umfassen.

## Claims

1. Device for holding a substantially parallelepipedic apparatus (1) in a motor vehicle, characterized in that an open frame (2) is provided to accommodate the apparatus (1),
- with framing areas extending along the lower edges of the apparatus and positively encompassing the apparatus in its lower part;
- with two framing areas (3, 4) passed in the manner of a shackle over the front corner areas (5, 6) of the apparatus (1) and accommodating same, and
- with a framing area (9) passed in the manner of a shackle over the rear part of the apparatus (1) and accommodating it, which framing area (9) has links (12) in its bottom part, so that the upper part of this area can be pivoted to secure or release the apparatus (1) to be held,
and in that means connected with the frame (2) for securing (15) the device are provided on a seat arrangement.

2. Device according to claim 1, characterized in that the frame (2) is in a highly resistant round material.

3. Device according to either claim 1 or claim 2, characterized in that folding joints with sleeve bolting (11) are provided as links (12).

4. Device according to one of claims 1 to 3, characterized in the provision of a bottom plate (B).

5. Device according to one of claims 1 to 4, characterized in that a belt (15) secured on the frame (2) is provided.

6. Device according to one of claims 1 to 5, characterized in that the framing areas (3, 4, 9) passed over the apparatus in the manner of a shackle encompass the apparatus positively.

## Revendications

1. Dispositif pour maintenir un appareil (1) de forme sensiblement parallélépipédique dans un véhicule, caractérisé en ce qu'il est prévu pour recevoir l'appareil (1) un chassis d'encadrement ouvert (2) :
- comportant des zones d'encadrement s'étendant le long des bords inférieurs de l'appareil et entourant ce dernier avec complémentarité de formes dans sa partie inférieure,
- deux zones d'encadrement (3,4) étant engagées en forme d'étrier sur les parties de coins avant (5,6) de l'appareil (1) et recevant celles-ci,
- et une zone d'encadrement (9) étant engagée en forme d'étrier sur la partie arrière de l'appareil (1) et recevant celle-ci, cette zone (9) comportant dans sa partie inférieure des articulations (12) et sa partie supérieure pouvant être déplacée par pivotement pour bloquer ou débloquer l'appareil (1) à maintenir ; et en ce qu'il est prévu des moyens, reliés au chassis d'encadrement (2) pour assurer la fixation (15) du dispositif sur une banquette.

2. Dispositif selon la revendication 1, caractérisé en ce que le chassis d'encadrement est formé d'un rond de grande résistance.

3. Dispositif selon une des revendications 1 et 2, caractérisé en ce que, comme articulations (12), il est prévu des articulations rabattables avec verrouillage par fourreaux.

4. Dispositif selon une des revendications 1 à 3, caractérisé en ce qu'il est prévu une plaque de base (B).

5. Dispositif selon une des revendications 1 a 4, caractérisé en ce qu'il est prévu une courroie (15) fixée sur le chassis d'encadrement.

6. Dispositif selon une des revendications 1 à 5, caractérisé en ce que les zones d'encadrement (3,4,9) engagées en forme d'étriers sur l'appareil entourent ce dernier avec complémentarité de formes.
